# EUROPÄISCHE PATENTSCHRIFT

(11) **EP 2 290 877 B1**
(45) Veröffentlichungstag und Bekanntmachung des Hinweises auf die Patenterteilung: **05.12.2012**
(21) Anmeldenummer: 10008697.4
(22) Anmeldetag: 20.08.2010
(51) Int. Cl.: H04L 12/10, G06F 1/26, H01B 9/00, H01B 11/02, H01B 11/10, H01R 9/03, H01R 13/648, H02G 15/18

(54) **Datenbus-Verbindungsanordnung**
Data bus connection assembly
Agencement de liaison à bus de données

(30) Priorität: 28.08.2009 DE 102009039024
(43) Veröffentlichungstag der Anmeldung: 02.03.2011
(73) Patentinhaber: Astrium GmbH, 82024 Taufkirchen (DE)
(72) Erfinder: Stiehle, Hubert, 88069 Tettnang (DE)
(74) Vertreter: Avenhaus, Beate

(56) Entgegenhaltungen:
- EP-A2- 1 772 989
- WO-A1-96/23377
- WO-A1-2006/138713
- WO-A2-98/11713
- US-A- 4 414 433
- US-A1- 2003 132 022
- US-A1- 2006 077 888
- US-B1- 6 218 930

## Beschreibung

### TECHNISCHES GEBIET

Die vorliegende Erfindung betrifft eine Datenbus-Verbindungsanordnung nach dem Oberbegriff des Patentanspruchs 1. Insbesondere betrifft die Erfindung ein Hochgeschwindigkeits-Bussystem und eine Datenbus-Verbindungsleitung dafür.

### STAND DER TECHNIK

Datenbus-Verbindungsanordnungen sind allgemein bekannt, beispielsweise als USB-Bus-Verbindung. Mittels einer USB-Verbindung können Daten und auch eine Versorgungsspannung zwischen zwei Geräten übertragen werden. Die USB-Verbindung benötigt für die Stromübertragung eigenständige Leiter. Aufgrund der Beschaffenheit der Leiter in einem USB-Kabel ist die Stromübertragung auf cirka 500 mA begrenzt. Des Weiteren ist die Datenübertragung auf eine maximale Entfernung von cirka 2 m begrenzt. USB-Bus-Verbindungen sind nicht zuverlässig gegen elektromagnetische Felder geschützt. Für die Datenübertragung auf dem Gebiet der Luft- und Raumfahrttechnik, wo hohe Sicherheitsanforderungen gelten, sind USB-Bus-Verbindungen nicht geeignet.

Um elektrische Geräte untereinander zu verbinden werden üblicherweise Stromversorgungsleitungen und Signal- oder Datenleitungen getrennt verlegt. Die Verlegung von Signalleitungen wird den unterschiedlichen Signaltypen angepasst. Unterschiedliche Signaltypen werden oft auf eigenen Signalleitungen mit unterschiedlicher Leitungsimpedanz und verschiedenen Steckverbindern verbunden. Es werden je nach Bedarf Einzeladern, Doppeladern, verdrillte Adern, geschirmte Adern und Kombinationen davon verlegt. Durch die Mischung unterschiedlicher Signaltypen und die Übertragung von Einzelsignalen (single ended lines) mit Massebezug müssen Leitungen auf Abstand gehalten werden, um ein Übersprechen zu verhindern. Hierzu ist ein nicht unerheblicher Ingenieursaufwand erforderlich. Es werden oft Datenschnittstellen mit unterschiedlichen Nennimpedanzen oder Übertragungskabel mit unbekannter Impedanz eingesetzt.

Es werden auch sogenannte PLC-Systeme (PLC: "power line communication") eingesetzt. Das daraus bekannte Verfahren nutzt eine nicht impedanzkontrollierte Stromversorgungsverkabelung um mittels hochfrequent moduliertem Träger Daten zu übertragen. Hierfür ist auf beiden Seiten aktive Elektronik erforderlich. Die übertragbare Datenrate ist bei PLC begrenzt. Bei PLC sind Störungen auf der Stromversorgung nicht von der Datenübertragung entkoppelt und umgekehrt. Durch Nutzung von unsymmetrischen Übertragungspfaden und nicht für die HF-Übertragung optimierte Leitungen kommt es bei PLC-Systemen zum Teil zu erheblichen unerwünschten Abstrahlungen und störenden Beeinflussungen.

Ebenfalls bekannt sind sogenannte POE-Systeme (POE: "power over ethernet"). Hierbei wird eine Versorgungsspannung über die Innenleiter einer Ethernetverbindung übertragen, wobei die Rückleitung über den Schirm erfolgt.

Die US 4,414,433 A beschreibt eine Leitungsverbindung zwischen einem Mikrofon und einem Verstärker, wobei die Leitungsverbindung zwei mit einer gemeinsamen Abschirmung versehene Leiter aufweist. Die Abschirmung liegt sowohl beim Mikrofon als auch beim Verstärker an Masse. Über die beiden jeweils einen Pol bildenden Leiter wird vom Mikrofon zum Verstärker das vom Mikrofon aufgenommene Signal übertragen. Die beiden das Mikrofonsignal übertragenden Leiter der Verbindungsleitung besitzen jeweils im Wesentlichen das gleiche Gleichstrompotential relativ zur Abschirmung, so dass über die Abschirmung und über die beiden Leiter vom Verstärker zum Mikrofon eine Versorgungsspannung an das Mikrofon angelegt ist. Auf diese Weise wird der Versorgungsstrom für das Mikrofon durch die Mikrofon-Signalleitung vom Verstärker zum Mikrofon übertragen.

Die WO 96/23377 beschreibt ein Multimediasystem mit einer zentralen Spannungsquelle und einem Stromverteilungs-Untersystem. Auch bei diesem System erfolgt die Stromversorgung durch eine an den Signalübertragungsleitern anliegende Phantomspannung.

### DARSTELLUNG DER ERFINDUNG

Aufgabe der vorliegende Erfindung ist es, eine Datenbus-Verbindungsanordnung gemäß dem Oberbegriff des Patentanspruchs 1 anzugeben, die eine zuverlässigere Datenübertragung, auch über größere Entfernungen und auch eine Stromübertragung von mehr als 500 mA ermöglicht und die möglichst gewichtssparend ausgelegt ist, sowie eine geeignete Datenbus-Verbindungsleitung anzugeben.

Diese Aufgabe wird durch die im kennzeichnenden Teil des Patentanspruchs 1 angegebenen Merkmale gelöst.

Erfindungsgemäß weist die Datenbus-Verbindungsanordnung zumindest einen ersten Geräteanschluss, zumindest einen zweiten Geräteanschluss und eine den ersten und den zweiten Geräteanschluss miteinander verbindende Busleitung auf. Die Busleitung weist ihrerseits zumindest ein erstes Anschlusselement zur Koppelung mit dem zumindest einen ersten Geräteanschluss und zumindest ein zweites Anschlusselement zur Koppelung mit dem zumindest einem zweiten Geräteanschluss sowie ein die elektrischen Anschlüsse der beiden Anschlusselemente durch eine Mehrzahl von Leitern elektrisch miteinander verbindendes Kabel auf. Zumindest einige der Leiter sind mit zumindest einem Schirm zur Abschirmung versehen und die Leiter sind zur Übertragung von Datensignalen ausgebildet. Erfindungsgemäß sind zumindest ein erster Schirm und zumindest ein weiterer Schirm zur Übertragung eines Versorgungsstroms mit einer Versorgungsspannung beaufschlagbar.

### VORTEILE

Die Verwendung von zumindest zwei Schirmen als Leiter zur Übertragung eines Versorgungsstroms besitzt den Vorteil, dass für die Stromleiter keine zusätzliche Leitung im Kabel vorgesehen sein muss, wodurch Kabelgewicht eingespart werden kann. Des Weiteren ist in der Regel die Querschnittsfläche des Schirms wesentlich größer als die Querschnittsfläche eines Datenkabels, sodass über den Schirm ein wesentlich höherer Strom übertragen werden kann, als dies über einen zur Datenübertragung vorgesehenen Leiter möglich ist. Gemäß der Erfindung werden der Leitungswiderstand gesenkt und die Stromübertragungskapazität erhöht.

Gewicht und Kosten einzelner Kabel und insbesondere von vielen Kabel aufweisenden Kabelbäumen können somit deutlich reduziert werden. Zudem kann die Gesamtzuverlässigkeit einer erfindungsgemäß aufgebauten Datenbus-Verbindungsanordnung erhöht werden.

Weitere bevorzugte und vorteilhafte Ausgestaltungsmerkmale der erfindungsgemäßen Datenbus-Verbindungsanordnung sind Gegenstand der Unteransprüche 2 bis 6.

Vorzugsweise liegt die Versorgungsspannung an gegeneinander isolierten Schirmen an, sodass der Versorgungsstrom über die jeweils einem Pol der Stromversorgung zugeordneten Schirme geleitet wird. In dieser Ausgestaltung der erfindungsgemäßen Datenbus-Verbindungsanordnung werden für die Übertragung des Versorgungsstroms zwei separate und gegeneinander isolierte Schirme genutzt, sodass die vorhandenen Innenleiter vollständig für die Datenübertragung zur Verfügung stehen.

In einer bevorzugten Weiterbildung davon sind zur Übertragung der Versorgungsspannung zumindest für einen Pol der Spannung mindestens zwei Schirme als Leiter parallel geschaltet. Durch diese Parallelschaltung von zwei oder mehr Schirmen zu einem Leiter für den Versorgungsstrom werden die ansonsten nur der Abschirmung dienenden Schirme zu einem beziehungsweise zwei leistungsfähigen Leitern zusammengefasst, deren Querschnitt deutlich größer ist als bei einem einzelnen Schirm. Dadurch wird der Leitungswiderstand gesenkt und/oder die Stromübertragungskapazität erhöht.

In einer bevorzugten Ausgestaltung der erfindungsgemäßen Datenbus-Verbindungsanordnung weist das Kabel einen Außenschirm auf, der zumindest einen Teil der abgeschirmten Leitungen , bevorzugt alle inneren geschirmten Leitungen, umschließt.

Dabei ist es besonders vorteilhaft, wenn ein erster Pol der Versorgungsspannung vom Außenschirm gebildet ist und wenn ein zweiter Pol von zumindest einem der Leiter und/oder von zumindest einem inneren Schirm gebildet ist. Da der Außenschirm aufgrund seines zwangsläufig größeren Durchmessers eine größere Querschnittsfläche besitzt als die inneren Schirme oder gar die Leiter zur Datenübertragung, kann unter Einbeziehung des Außenschirms als Leiter für die Stromübertragung die Größe des zu übertragenden Stroms weiter heraufgesetzt werden.

Vorteilhaft ist weiterhin eine Ausgestaltung der erfindungsgemäßen Datenbus-Verbindungsanordnung, bei der die Geräteanschlüsse und die Anschlusselemente des Kabels HF-Steckverbinder aufweisen. Dadurch wird die Zuverlässigkeit der Datenübertragung erhöht und die Geschwindigkeit der Datenübertragung kann ebenfalls heraufgesetzt werden.

Der Teil der Aufgabe, der die Datenbus-Verbindungsleitung betrifft, wird gelöst von einer Datenbus-Verbindungsleitung gemäß Anspruch 7. Diese auch als Busleitung bezeichnete Datenbus-Verbindungsleitung ist versehen mit zumindest einem ersten Anschlusselement mit zumindest einem Steckverbinder, zumindest einem zweiten Anschlusselement mit zumindest einem Steckverbinder sowie einem die elektrischen Anschlüsse der beiden Anschlusselemente durch eine Mehrzahl von Leitern elektrisch leitend miteinander verbindendes Kabel aufweist, wobei zumindest einige der Leiter mit zumindest einem Schirm zur Abschirmung versehen sind; und wobei die Leiter zur Übertragung von Datensignalen ausgebildet sind. Die erfindungsgemäße Datenbus-Verbindungsleitung zeichnet sich dadurch aus, dass zumindest ein erster Schirm und zumindest ein weiterer Schirm zur Übertragung eines Versorgungsstroms ausgebildet und mit einer Versorgungsspannung beaufschlagbar sind.

Vorzugsweise sind zur Erhöhung des Leitungsquerschnitts und damit zur Erhöhung des übertragbaren Stroms zumindest zwei Schirme zur Übertragung des Versorgungsstroms parallel schaltbar.

### DARSTELLUNG DER ERFINDUNG

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1A: eine erfindungsgemäße Datenbus-Verbindungsleitung (Busleitung) in einer Minimalkombination mit zwei inneren Leitern;
- Fig. 1 B: ein Schaltbild einer ersten Variante einer Stromübertragung über die Busleitung nach Fig. 1A;
- Fig. 1C: eine zweite Variante der Übertragung eines Versorgungsstroms über die Busleitung gemäß Fig. 1A in einer erfindungsgemäßen Datenbus-Verbindungsanordnung;
- Fig. 2: eine geschnittene Darstellung einer zweiten Ausführungsform einer erfindungsgemäßen Datenbus-Verbindungsleitung mit vier inneren Leitern;
- Fig. 3: eine dritte Ausführungsform einer erfindungsgemäßen Datenbus-Verbindungsleitung mit acht inneren Leitern;
- Fig. 4A: die zweite Variante der erfindungsgemäßen Datenbus- Verbindungsleitung gemäß Fig. 2 mit zwei Anschlusselementen (Stecker und Buchse);
- Fig. 4B: ein Schaltbild der Busleitung gemäß Fig. 4A zur Übertragung eines Versorgungsstroms über die inneren Schirme;
- Fig. 5A bis 5D: unterschiedliche Möglichkeiten der Übertragung eines Versorgungsstroms über die Busleitung der Fig. 4A;
- Fig. 6: ein Blockschaltbild zur Anbindung mehrerer elektrischer Geräte an eine Schnittstelleneinheit (Interface-Einheit) IFU mittels erfindungsgemäßer Busleitungen (HSB);
- Fig. 7A: die Übertragung einer Mehrzahl von Signalen über eine erfindungsgemäße Datenbus-Verbindungsleitung gemäß Fig. 3 mittels eines Multiplexers und eines Demultiplexers in einer Übertragungsrichtung;
- Fig. 7B: die Übertragung einzelner Signale mittels Multiplexer und Demultiplexer in zwei Übertragungsrichtungen (bidirektional);
- Fig. 8A: die Darstellung eines herkömmlichen Bussystems;
- Fig. 8B: die Darstellung eines Bussystems mit sternförmiger Anbindung von elektrischen Geräten über die erfindungsgemäßen Datenbus-Verbindungsleitungen (HSB);
- Fig. 9A: eine schematische Darstellung der Datenübertragung über eine zweiadrige erfindungsgemäße Busleitung, wie sie in Fig. 1A gezeigt ist;
- Fig. 9B: ein Schaltbild einer Datenübertragung gemäß Fig. 9A, aber mit Übertragung einer Versorgungsspannung über die Busleitung;
- Fig. 9C und 9D: Schaltbilder für stromkompensierte Drosseln zur Einkopplung einer Versorgungsspannung in die Datenleiter;
- Fig. 9E: ein Schaltbild einer Variante zur Einkopplung einer Versorgungsspannung auf die Datenleiter über stromkompensierte Übertrager;
- Fig. 10A: ein Schaltbild eines Beispiels für eine Modenentkopplung und Filterung auf der Empfängerseite;
- Fig. 10B: ein Schaltbild für ein Beispiel einer Modenentkopplung und Filterung auf der Treiberseite;
- Fig. 10C: ein Beispiel einer Abschlusswiderstandsanordnung auf der Empfängerseite im Beispiel der Fig. 10A;
- Fig. 11A: eine Common-Mode-Filterung ohne Einfluss auf das Differential-Mode-Nutzsignal;
- Fig. 11B: ein Ersatzschaltbild der Common-Mode-Filterung gemäß Fig. 11A;
- Fig. 12: ein Schaltbild einer Variante mit zusätzlicher Nutzung der Innenschirme für weitere Datenübertragung;
- Fig. 13: ein Schaltbild für eine frequenzmäßige Entkopplung zweier Datenströme auf demselben Leitungspaar;
- Fig. 14: eine graphische Darstellung des Signalverlaufs über die Frequenz bei der Tiefpass-Hochpass-Entkopplung gemäß Fig. 13;
- Fig. 15: eine Hybrid-Gabelschaltung zur Richtungsentkopplung zweier Datenströme;
- Fig. 16: ein Prinzipschaltbild der in Fig. 15 dargestellten Hybride;
- Fig. 17A: die Entkopplung und den Abschluss des inneren Schirms mittels diskreter Kondensatoren;
- Fig. 17B: die Entkopplung und den Abschluss des inneren Schirms mittels eines Durchführungskondensators;
- Fig. 17C: die Stromeinspeisung beziehungsweise Stromauskopplung in einem Anschlusselement mittels eines Durchführungskondensators; und
- Fig. 18: ein Beispiel für eine höhere Common-Mode-Entkopplung bei einer Wechselstromübertragung.

### DARSTELLUNG VON BEVORZUGTEN AUSFÜHRUNGSBEISPIELEN

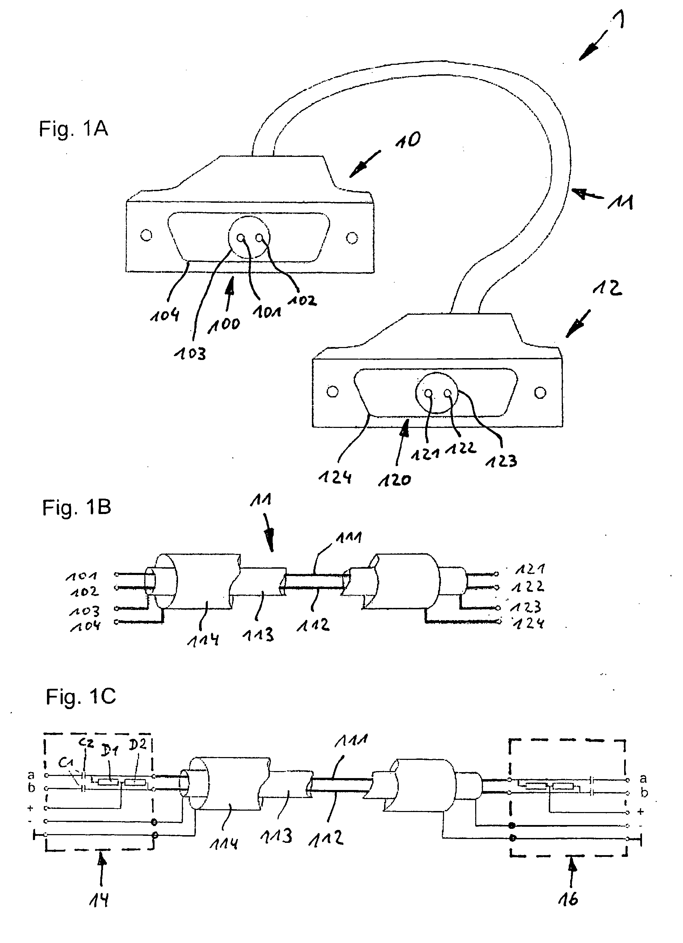

In den Fig. 1A bis 1C ist eine erste erfindungsgemäße Datenbus-Verbindungsanordnung dargestellt.

Fig. 1A zeigt eine Busleitung 1 einer ersten Ausführungsform der erfindungsgemäßen Datenbus-Verbindungsanordnung. Die Busleitung 1 ist an ihren Enden mit jeweils einem Anschlusselement 10, 12 versehen, wobei jedes Anschlusselement 10, 12 einen Steckverbinder 100, 120 aufweist. Die Steckverbinder 100, 120 können als Stecker oder Kupplung ausgebildet sein und werden jeweils in einen (nicht gezeigten) Geräteanschluss miteinander zu verbindender Geräte eingesteckt.

Die in Fig. 1A gezeigte Busleitung 1 ist als zweipolige Busleitung ausgestaltet, so dass die Steckverbinder 100, 120 jeweils einen ersten Pol 101, 121 und einen zweiten Pol 102, 122 enthalten. Beide Pole sind von einem inneren Schirmpol 103, 123 umgeben. Weiterhin weist der jeweilige Steckverbinder einen äußeren Schirmpol 104, 124 auf, der gegenüber dem inneren Schirmpol 103, 123 isoliert ist.

Die beiden Pole 101, 102 sowie die beiden Schirmpole 103, 104 des ersten Anschlusselements 10 und die beiden Pole 121, 122 sowie die beiden Schirmpole 123, 124 des zweiten Anschlusselements 12 bilden elektrische Anschlüsse, die durch eine Mehrzahl von Leitern eines die Anschlusselemente verbindenden Kabels 11 elektrisch leitend miteinander verbunden sind.

Der Aufbau des Kabels 11 ist in Fig. 1B schematisch gezeigt. Zum Zwecke der Übersichtlichkeit sind der Kabelmantel sowie die Isolierungen zwischen den einzelnen Leitern nicht dargestellt. Zwei innere Leiter 111, 112 bilden Datenübertragungsleiter und sind von einem inneren Schirm 113 umgeben. Die inneren Leiter 111, 112 können miteinander verdrillt sein und so eine "Twisted-Pair"-Leitung bilden. Die beiden Leiter 111, 112 sind jeweils mit einer Isolationshülle ummantelt und sind so relativ zueinander und relativ zum inneren Schirm 113 isoliert. Ein äußerer Schirm 114 umgibt den inneren Schirm 113, wobei auch diese beiden Schirme relativ zueinander isoliert sind.

Die erste innere Leitung 111 verbindet den Pol 101 des ersten Steckverbinders 100 mit dem Pol 121 des zweiten Steckverbinders 120. Die zweite innere Leitung 112 verbindet den Pol 102 des ersten Steckverbinders 100 mit dem Pol 122 des zweiten Steckverbinders 120. Der innere Schirm 113 verbindet den inneren Schirmpol 103 des ersten Steckverbinders 100 mit dem inneren Schirmpol 123 des zweiten Steckverbinders 120 und der äußere Schirm 114 verbindet den äußeren Schirmpol 104 des ersten Steckverbinders 100 mit dem äußeren Schirmpol 124 des zweiten Steckverbinders 120.

Die erfindungsgemäße Datenbus-Verbindungsanordnung ist in der Lage, neben Daten oder anderen Nutzsignalen die über die inneren Leiter 111, 112 übertragen werden, auch eine Versorgungsspannung zu übertragen, wie nachstehend anhand der Darstellung in Fig. 1C erläutert wird.

Die in Fig. 1C gezeigte Einspeisung der Versorgungsspannung in die Busleitung 1 und die Auskoppelung der Versorgungsspannung aus der Busleitung 1 erfolgt vorzugsweise im Bereich des jeweiligen Geräteanschlusses 14, 16. Die Datensignale werden über die Leitungen a und b galvanisch durch Kondensatoren C1 und C2 entkoppelt in die inneren Leiter 111, 112 eingeleitet. Der Pluspol der als Gleichspannung ausgebildeten Versorgungsspannung wird an die inneren Leiter 111, 112 angelegt, wobei zwischen dem Pluspol und dem ersten inneren Leiter 111 sowie dem zweiten inneren Leiter 112 jeweils eine CM-Drossel D1, D2 vorgesehen ist (CM = "Common Mode"). Der Minuspol der Versorgungsspannung wird an den inneren Schirm 113 angelegt. Der äußere Schirm 114 ist über die Masse geerdet. Die Auskoppelung der Versorgungsspannung aus den inneren Leitern 111, 112 sowie dem inneren Schirm 113 erfolgt im zweiten Geräteanschluss 16 auf die gleiche Weise, wie dies vorstehend für die Einkoppelung beschrieben worden ist. Die Betriebsspannung kann als Gleichtaktsignal somit über die inneren Leiter 111, 112 als Hinleiter und den inneren Schirm 113 als Rückleiter erfolgen. Alternativ kann die Hinleitung auch über den inneren Schirm 113 und die Rückleitung über ein allgemeines Massesystem, beispielsweise den äußeren Schirm 114, erfolgen. Hierbei ist der innere Schirm 113, der die innere Leiter 111, 112 umgibt, galvanisch gegen Masse zu isolieren. Vorzugsweise sollte auch die Schirmanbindung auf beiden Seiten des Kabels kapazitiv erfolgen.

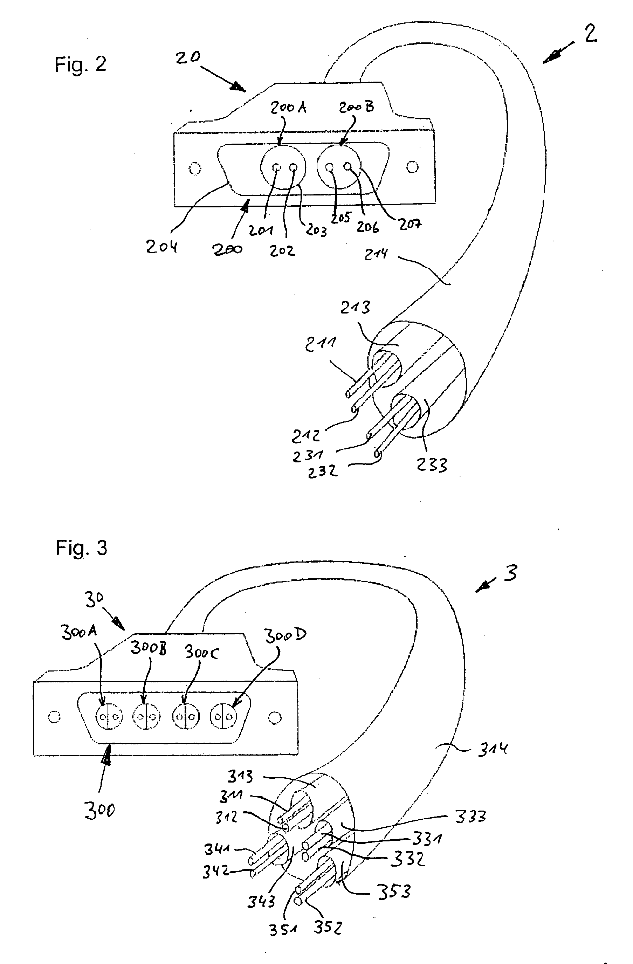

Fig. 2 zeigt eine geschnittene Darstellung einer ersten alternativen Busleitung 2 des erfindungsgemäßen Daten-Bus-Verbindungssystems. Die Busleitung 2 enthält zwei Paare von Verbindungsleitungen 211 und 212 sowie 231 und 232, die jeweils als Twisted-Pair-Leitung ausgebildet sind und wobei jeweils ein Paar von einem inneren Schirm 213, 233 umhüllt ist. Die beiden inneren Schirme 213, 233 sind von einem äußeren Schirm 214 umhüllt und sowohl gegeneinander, als auch gegen den äußeren Schirm 214 isoliert. Entsprechend der in der Busleitung 2 vorgesehenen zwei abgeschirmten Twisted-Pair-Leitungen ist auch in den Anschlusselementen, von denen hier nur das Anschlusselement 20 gezeigt ist, eine gegenüber dem Beispiel der Fig. 1A verdoppelte Anzahl der Pole und der inneren Schirmpole im Steckverbinder 200 vorgesehen. So ist zu erkennen, dass der Steckverbinder 200 zwei Kontakteinrichtungen 200A, 200B aufweist, wobei die erste Kontakteinrichtung 200A mit den Leitern 211 bzw. 212 verbundene Pole 201 und 202 sowie einen diese Pole ringförmig umgebenden und mit dem ersten inneren Schirm 213 verbundenen Schirmpol 203 aufweist. Die zweite Kontakteinrichtung 200B weist einen mit dem Leiter 231 verbundenen Pol 205 sowie einen mit dem Leiter 232 verbundenen Pol 206 und einen diese beiden Pole 205, 206 ringförmig umgebenden Schirmpol 207 auf, der mit dem zweiten inneren Schirm 233 verbunden ist. Ein äußerer Schirmpol 204 umgibt die beiden Kontaktelemente 200A und 200B.

Fig. 3 zeigt eine dritte alternative Busleitung 3, die ebenfalls teilweise geschnitten dargestellt ist. Die Busleitung 3 umfasst vier gegeneinander isolierte Innenschirme 313, 333, 343, 353, die jeweils zwei miteinander verdrillte Leiter 311, 312; 331, 332; 341, 342; 351, 352 umgeben. Die vier Innenschirme 313, 333, 343, 353 sind gegeneinander isoliert und von einem Außenschirm 314 umgeben, der ebenfalls gegen die einzelnen Innenschirme isoliert ist. Die Anschlusselemente, von denen hier nur das Anschlusselement 30 gezeigt ist, weisen jeweils einen Steckverbinder 300 auf, der vier Kontakteinrichtungen 300A, 300B, 300C und 300D aufweist, die jeweils einem mit einem inneren Schirm umgebenen Leiterpaar zugeordnet sind und die jeweils so aufgebaut sind, wie dies in Verbindung mit den Fig. 1 und 2 für die dortigen Kontaktelemente beschrieben worden ist. Die vier Kontakteinrichtungen 300A, 300B, 300C, 300D sind von einem äußeren Schirmpol 304 umgeben, der mit dem äußeren Schirm 314 elektrisch leitend verbunden ist.

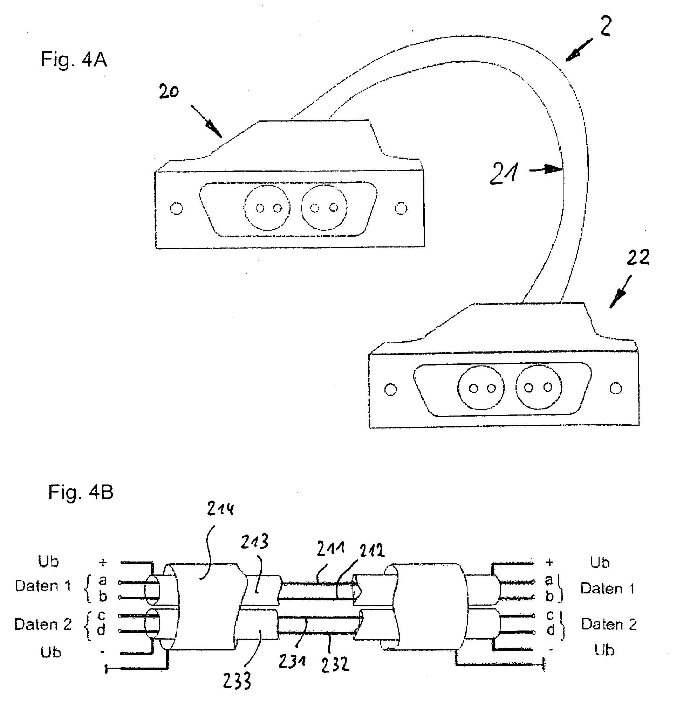

Fig. 4A zeigt die in Verbindung mit der Fig. 2 beschriebene Busleitung 2 mit den beiden Anschlusselementen 20, 22 und dem sich zwischen den Anschlusselementen erstreckenden Kabel 21.

In Fig. 4B ist zu erkennen, dass die Innenleiter 211, 212 einen ersten Strom von Daten oder anderen Nutzsignalen übertragen, die in der Figur mit "Daten 1" bezeichnet sind. Die zweiten inneren Leiter 231, 232 übertragen einen zweiten Strom von Daten oder anderen Nutzsignalen, der mit "Daten 2" bezeichnet ist. Die Versorgungsspannung Ub wird über die beiden inneren Schirme 213, 233 geleitet, wobei der Pluspol der Versorgungsspannung am ersten inneren Schirm 213 und der Minuspol der Versorgungsspannung am zweiten inneren Schirm 233 anliegt. Der Außenschirm 214 ist über die Masse geerdet.

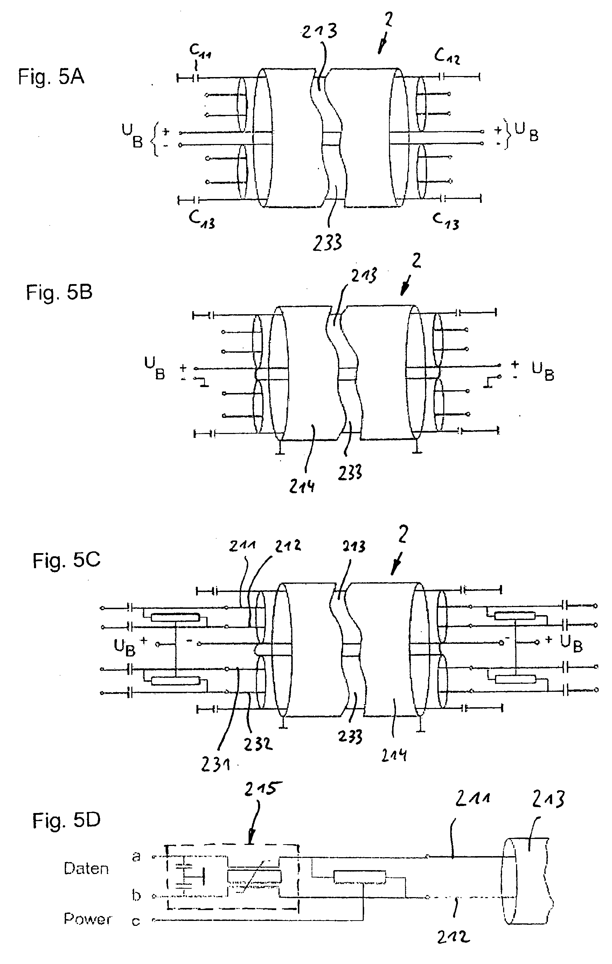

Die Fig. 5A bis 5C zeigen am Beispiel der Busleitung 2 aus den Fig. 2, 4A und 4B unterschiedliche Varianten der Übertragung der Versorgungsspannung über die Busleitung 2.

In der in Fig. 5A gezeigten Variante wird die Versorgungsspannung U_{B} wie bei der in Fig. 4B gezeigten Variante über die inneren Schirme 213 und 233 geleitet. Zugleich liegen die inneren Schirme 213, 233 über Durchführungskondensatoren C₁₁, C₁₂, C₁₃, C₁₄ an Masse an. Die Durchführungskondensatoren sind jeweils an einem freien Ende des zugeordneten inneren Schirms 213, 233 an diesem angeschlossen. Diese Art der Beaufschlagung mit der Versorgungsspannung wird bevorzugt eingesetzt.

Fig. 5B zeigt eine andere Beaufschlagung der Busleitung 2 mit der Versorgungsspannung U_{B}, bei der Pluspol der Versorgungsspannung U_{B} an die beiden inneren Schirme 213 und 233 angeschlossen ist, so dass diese inneren Schirme zueinander parallel geschaltet sind. Der Minuspol der Versorgungsspannung U_{B} wird über den an Masse anliegenden Außenschirm 214 geleitet. Auch bei dieser Variante sind die inneren Schirme 213, 233 wie im Beispiel der Fig. 5A über Durchführungskondensatoren an Masse gelegt. Der Vorteil der in Fig. 5B gezeigten Variante liegt darin, dass durch die Parallelschaltung der beiden anderen Schirme 213, 233 ein größerer Leitungsquerschnitt für den Versorgungsstrom geschaffen wird, so dass ein gegenüber der in Fig. 5A gezeigten Variante größerer Strom übertragen werden kann. Ein vergrößerter Leitungsquerschnitt steht dazu auch dem Minuspol der Versorgungsspannung U_{B} zur Verfügung, da der äußere Schirm 214 aufgrund seines größeren Durchmessers einen wesentlich größeren Leitungsquerschnitt besitzt als ein einzelner der inneren Schirme.

Eine dritte Variante der Übertragung des Versorgungsstroms über die Busleitung 2 ist in Fig. 5C dargestellt. Der Minuspol der Versorgungsspannung U_{B} wird über die parallel geschalteten inneren Schirme 213, 233 geleitet, wobei diese wie in den vorangegangenen Beispielen über Durchführungskondensatoren an Masse anliegen. Der Pluspol der Versorgungsspannung U_{B} wird über die Innenleiter 211, 212, 231, 232 geleitet, wobei die Einleitung des Versorgungsstroms in die Innenleiter in einer Weise erfolgt, wie dies bereits in Verbindung mit der Fig. 1C beschrieben worden ist. Auch im Beispiel der Fig. 5C werden die Datensignale beziehungsweise Nutzsignale galvanisch durch Kondensatoren entkoppelt in die inneren Leiter 211, 212, 231, 232 eingeleitet. Die Auskopplung der Versorgungsspannung aus den inneren Leitern 211, 212, 231, 232 erfolgt auf die gleiche Weise wie die Einkopplung. Der äußere Schirm 214 ist über Masse geerdet.

Ist die Entkopplung über Kondensatoren nicht ausreichend, so kann die in Fig. 5D schematisch für ein Adernpaar 211, 212 gezeigte Entkopplungsschaltung zwischen der Einleitung der Daten- beziehungsweise Nutzsignale a, b und der Einleitung des entsprechenden Pols c der Versorgungsspannung vorgesehen sein. Diese sogenannte CM-Sperre 215 bewirkt somit eine verbesserte Entkopplung zwischen der reinen Datenleitung und den für die Daten- und Stromübertragung dienenden Leitern 211, 212.

Die Versorgungsspannung kann somit zusätzlich zu der Übertragung von Daten beziehungsweise Nutzsignalen auf unterschiedliche Weisen übertragen werden:
- über einen oder mehrere der inneren Schirme, auch wenn diese parallel geschaltet sind,
- als Gleichtaktsignal über ein oder mehrere Leiterpaare, auch wenn diese für die Stromübertragung parallel geschaltet sind,
- als Hinleiter (zum Beispiel Plus-Leitung) über ein erstes Adernpaar und als Rückleiter (zum Beispiel Minus-Leitung) über ein zweites Adernpaar,
- als Hinleiter (zum Beispiel Plus-Leitung) über ein erstes Adernpaar und als Rückleiter (zum Beispiel Minus-Leitung) über einen der Schirme, bevorzugt über einen der Innenschirme,
- als Hinleiter (zum Beispiel Plus-Leitung) über einen der Innenschirme und als Rückleiter (zum Beispiel Minus-Leitung) über einen zweiten, gegenüber dem ersten Innenschirm isolierten Innenschirm, oder
- als Hinleiter (zum Beispiel Plus-Leitung) über einen ersten Innenschirm und als Rückleiter (zum Beispiel Minus-Leitung) über den Außenschirm.

Durch Parallelschaltung der Innenschirme beziehungsweise von Leiterpaaren bezüglich der Stromübertragung können noch weitere Abwandlungen gebildet werden.

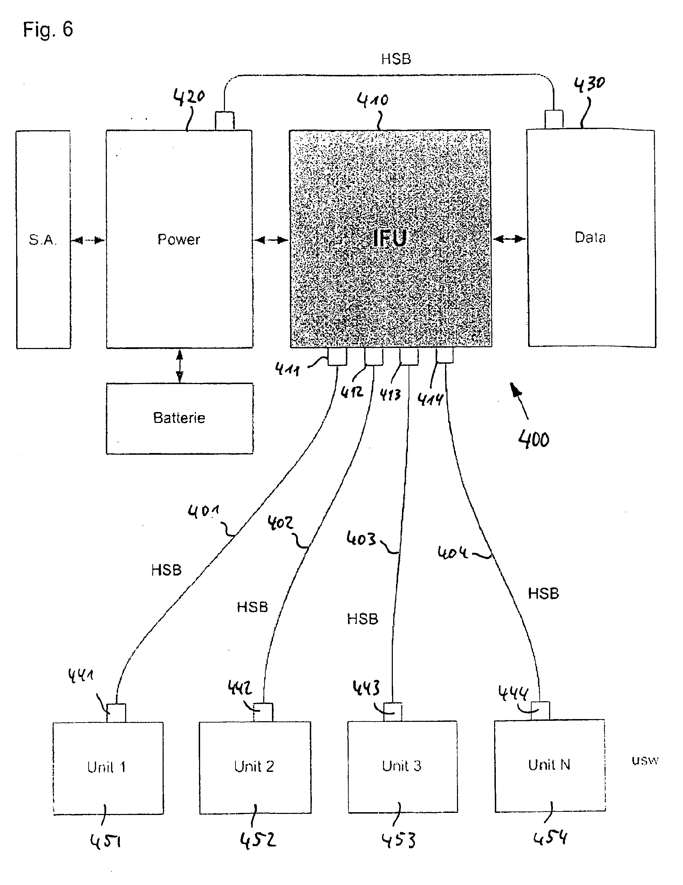

Fig. 6 zeigt ein Strukturschaubild einer erfindungsgemäßen Datenbus-Verbindungsanordnung. Die bereits vorstehend in zahlreichen Varianten beschriebene Busleitung ist in Fig. 6 mit "HSB" bezeichnet. Dieser Abkürzung "HSB" steht für "High Speed Bus" und sagt aus, dass es sich bei der erfindungsgemäßen Datenbus-Verbindungsanordnung um einen Hochgeschwindigkeitsbus handelt, der wesentlich höhere Datenübertragungsgeschwindigkeiten erreichen kann, als es das bekannte USB-System ermöglicht.

Innerhalb eines geschirmten elektrischen Systems kann ein HSB-Kabel ein elektrisches Gerät (Unit) mit einem zentralen elektrischen Gerät, zum Beispiel einem Bordrechner eines Luft- oder Raumfahrzeugs oder einer Stromversorgung, verbinden und wird dabei von diesem zentralen elektrischen Gerät mit elektrischer Energie und mit Daten beziehungsweise Nutzsignalen versorgt. In Analogie zur bekannten USB-Schnittstelle im IT-Bereich ist die erfindungsgemäße HSB-Datenbus-Verbindungsleitung ein standardisiertes Verbindungskabel mit einer standardisierten Schnittstelle zum entsprechenden Geräteanschluss, das gleichzeitig Daten und Betriebsspannung unabhängig vom Datenprotokoll übertragen kann.

Über eine HSB-Verbindung können sämtliche Signale symmetrisch übertragen werden, auch die Versorgungsspannung. In Verbindung mit den bereits beschriebenen koaxialen und symmetrischen HF-Steckverbindern ist damit ein Übersprechen auf Nachbarleiter auf ein technisch realisierbares Minimum reduziert. Aus der Sicht der elektromagnetischen Verträglichkeit EMV und auch unter Hochfrequenz-Gesichtspunkten ist mit HSB eine hochoptimierte Übertragungstechnik geschaffen. Erdschleifen, sogenannte "Ground loops" gehören damit der Vergangenheit an.

Für die HSB-Busleitungen wird bevorzugt eine Kabelimpedanz von 100 Ohm gewählt, da sich diese Kabelimpedanz bereits im IT-Bereich als Standard etabliert hat. Auch für die Datenübertragung auf Satelliten werden Leitungen mit einer Kabelimpedanz von 100 Ohm verwendet.

Wie in Fig. 6 gezeigt ist, ist im zentralen elektrischen Gerät 400 eine Interfaceeinheit 410 ("IFU") vorgesehen, die die ersten Geräteanschlüsse 411, 412, 413, 414 aufweist. In der Interfaceeinheit 410 werden die von einer Stromversorgungseinrichtung 420 gelieferte Versorgungsspannung und die von einer Datenquelle 430 gelieferten Daten beziehungsweise Nutzsignale für die HSB-Übertragung zusammengeführt.

Die Interface-Einheit kann beispielsweise ein eigenständige Schnittstelleneinheit sein, der einerseits die Betriebsspannung aus einer Stromwandlereinheit (PCU) zugeführt wird und der andererseits Daten und Signale aus dem Bordrechner (OBC) zugeführt werden. Die Interfaceeinheit 410, die auch als Schnittstelleneinheit bezeichnet werden kann, kann auch in die Stromwandlereinheit oder in den Bordrechner integriert sein.

Von dem jeweiligen ersten Geräteanschluss 411, 412, 413, 414 an der Interfaceeinheit 410 verläuft jeweils ein erfindungsgemäßes HSB-Kabel als Busleitung 401, 402, 403, 404 zu jeweils einem Geräteanschluss 441, 442, 443, 444 eines jeweiligen elektrischen Geräts 451, 452, 453, 454. Ein jedes HSB-Kabel besteht aus geschirmten, Impedanz-kontrollierten, symmetrischen Datenkabeln mit Gesamtschirm. Die Impedanz der einzelnen Datenkabel beträgt bevorzugt 100 Ohm. Der für die Datenübertragung beziehungsweise Nutzsignalübertragung vorgesehene Leitungsquerschnitt wird gleichzeitig zur Übertragung von elektrischer Energie verwendet, ohne dass hierfür zusätzliche oder getrennte Leitungen vorgesehen sein müssen, wie dies bereits eingangs beschrieben worden ist. Die Ein- und Auskoppelung von Daten und Versorgungsspannung ist rein passiv, das heißt es wird hierzu keine aktive Elektronik benötigt.

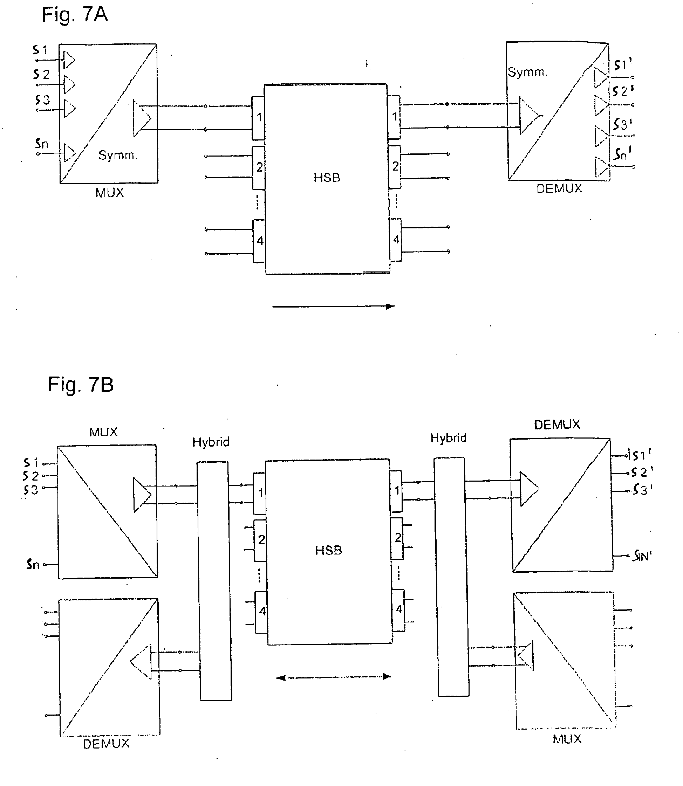

Es bietet sich an, alle Einzeldrahtverbindungen eines elektronischen Systems auf den HSB-Standard zu konvertieren, um möglichst hohe Übertragungsbandbreiten innerhalb des elektronischen Systems zu erzielen. Hierfür können, wie in Fig. 7A und 7B gezeigt ist, über Multiplexer-Schaltungen (MUX) und Demultiplexer-Schaltungen (DEMUX) viele Eindrahtverbindungen auf eine einzige symmetrische Zweidrahtverbindung umgesetzt werden. Für die Übertragung von Einzelleitungssignalen ist auf der einen Seite ein Multiplexer beziehungsweise Symmetrieumsetzer (MUX) und auf der anderen Seite ein Demultiplexer (DEMUX) erforderlich. Aus Standardisierungsgründen wird vorgeschlagen, diese gemultiplexten Signale aus Eindrahtverbindungen bevorzugt auf dem ersten Leitungspaar eines HSB-Kabels zu übertragen.

Fig. 7 zeigt schematisch wie die einzelnen Signale S1, S2, S3, Sn im Multiplexer (MUX) zusammengefasst und über ein vier Doppelleiter aufweisendes HSB-Kabel HSB zu einem Demultiplexer (DEMUX) übertragen werden. Die Signalübertragungsrichtung ist in Fig. 7A durch einen Pfeil symbolisiert.

Fig. 7B zeigt einen entsprechenden Aufbau bei bidirektionaler Datenübertragung, wie durch den Doppelpfeil symbolisiert ist.

Die erfindungsgemäße Datenbus-Verbindungsanordnung (HSB-Übertragungssystem) ist zunächst als offener Übertragungsstandard vorgesehen. Der Anwender kann somit selbst die für die Übertragung möglichen Übertragungsmodi, die Adernpaare und die Schirme, die ihm HSB zur Verfügung stellt, frei wählen. Dies bedeutet die Möglichkeit der Mehrfachnutzung von Übertragungspaaren. Bei Raumfahrtanwendungen können zum Beispiel alle vorhandenen Bus-Systeme und Bus-Standards ohne Probleme direkt über die erfindungsgemäße HSB-Datenbus-Verbindungsanordnung übertragen werden.

Die erfindungsgemäße Datenbus-Verbindungsanordnung wird bevorzugt für Punkt-zu-Punkt-Verbindungen eingesetzt. Daher werden bevorzugt sternförmige Verteilerstrukturen mit diesem erfindungsgemäßen HSB-Bus aufgebaut. Es können jedoch auch baumförmige Bussysteme (zum Beispiel MILBUS 1553) mittels der erfindungsgemäßen Datenbus-Verbindungsstruktur aufgebaut werden. Die Buskoppler sitzen dabei bevorzugt in dem jeweils angeschlossenen Gerät, beispielsweise in dessen Geräteanschluss für die Datenbus-Verbindungsleitung.

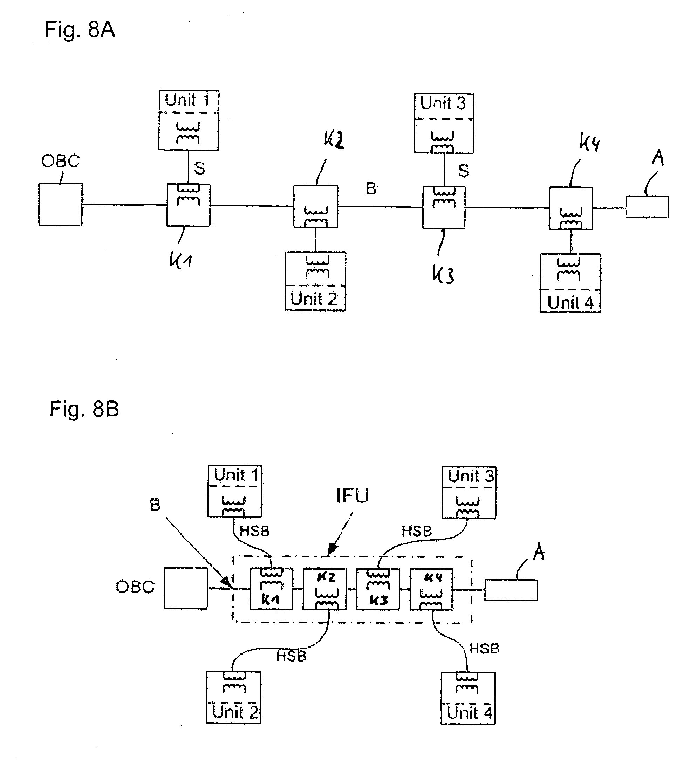

Die Fig. 8A und 8B zeigen zwei unterschiedliche Varianten der Realisierung einer Busstruktur, im zweiten Fall der Fig. 8B mittels des erfindungsgemäßen HSB-Bussystems.

Fig. 8A stellt einen zentralen, relativ langen Bus B dar, auf welchem in größeren Abständen Koppeleinrichtungen K1, K2, K3, K4 vorgesehen sind. An seinem ersten Ende ist der Bus B mit einem Computer OBC (beispielsweise einem Luftfahrzeug-Bordcomputer) verbunden. Am anderen Ende ist ein Busabschluss A vorgesehen. An den Koppeleinrichtungen K1, K2, K3, K4 sind mittels kurzer Busverbindungen SB jeweilige Geräte "Unit 1" bis "Unit 4" an den Bus B angeschlossen. Bei dieser Busstruktur, die einem herkömmlichen Bussystem, beispielsweise einem MILBUS 1553 B, entspricht, überwindet der zentrale Bus größere Strecken zwischen den einzelnen Geräte-Anschlüssen und die Geräte sind jeweils mit kurzen Busleitungen an den zentralen Bus angekoppelt.

Fig. 8B zeigt eine Möglichkeit, eine wesentlich kompaktere Anbindung der einzelnen Geräte mit der erfindungsgemäßen HSB-Datenbus-Verbindungseinrichtung zu realisieren. Die Kopplungseinrichtungen K1, K2, K3, K4 sind hier in einer Schnittstelleneinheit IFU untergebracht, wo sie durch kurze Busverbindungen miteinander gekoppelt sind. Die einzelnen Geräte "Unit 1" bis "Unit 4" sind über lange HSB-Verbindungen an jeweils eine zugeordnete Kopplungseinrichtung angeschlossen. Aufgrund der besonders guten Übertragungseigenschaften der erfindungsgemäßen HSB-Verbindungen können die einzelnen Geräte auch über längere Entfernungen an die Schnittstelleneinheit IFU angeschlossen werden, so dass der zentrale Bus B kurz und kompakt ausgebildet sein kann.

Bei den in den Fig. 8A und 8B gezeigten Beispielen sind die geräteseitigen Buskoppler in den Geräteanschlüssen der Geräte "Unit 1" bis "Unit 4" vorgesehen. Die Übertragung über die sternförmig angeordneten HSB-Busverbindungen kann auch über längere Strecken ohne Qualitätseinbußen erfolgen. Andere Bussysteme mit einer anderen Leitungsimpedanz als der HSB-Bus können ohne größere Probleme auf die HSB-Impedanz von 100 Ohm angepasst werden oder sogar ohne Einschränkung direkt auf dem HSB-Bus übertragen werden. Die erfindungsgemäßen HSB-Verbindungen können aufgrund ihrer hochgradigen Übertragungsqualität zu einer Renaissance von Low-Power-Datenübertragungen (zum Beispiel LVDS) führen, die bislang aufgrund unzulänglicher Übertragungsentfernungen und EMV-Problemen nur sehr schwierig zu realisieren waren.

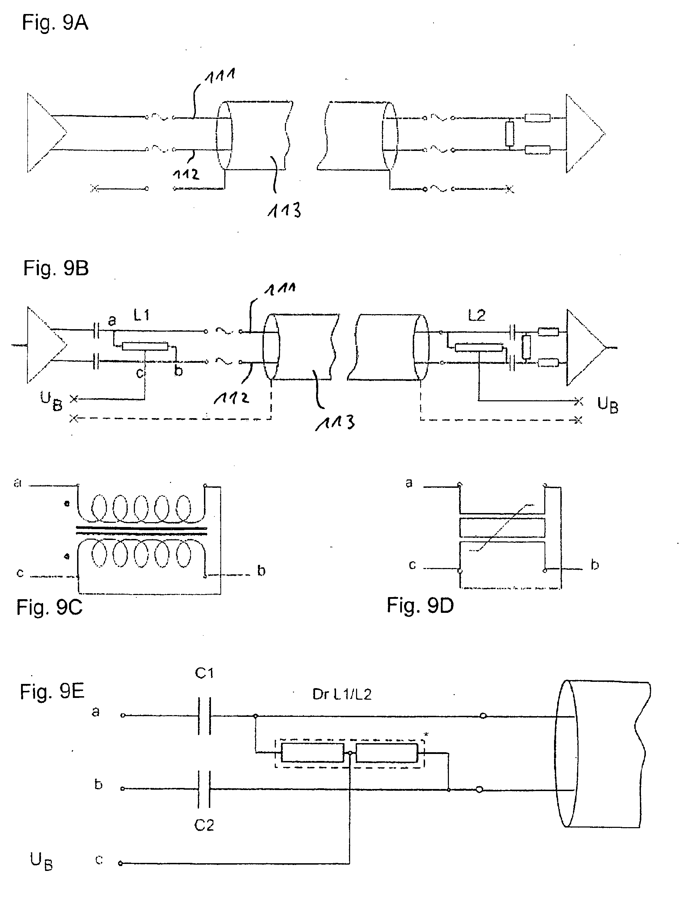

Nachstehend werden anhand der Fig. 9A bis 9E unterschiedliche Varianten der Datenankoppelung an die Datenleiter beschrieben.

Fig. 9A zeigt den Standardfall, bei der keine Versorgungsspannung auf den inneren Leitern 111, 112, die vom inneren Schirm 113 umgeben sind, anliegt.

Fig. 9B zeigt den Fall, bei dem ein Pol der Versorgungsspannung über die inneren Leiter 111, 112 geführt wird, während der andere Pol der Versorgungsspannung U_{B} über den inneren Schirm 113 geleitet wird. Die Übertragung der Versorgungsspannung über den Gleichtaktweg der inneren Leiter 111, 112 erfordert bei gleichzeitiger Datenübertragung über diese Leiter ein passives Ein-/Auskoppelnetzwerk. Die Gleichspannung wird hierbei unter anderem kapazitiv zur Datenstrecke entkoppelt. Dies führt für die Datenstrecke zu einem Hochpassverhalten und damit lassen sich nur Datencodes für die Übertragung nutzen, die keinen Gleichstromanteil (DC-Anteil) aufweisen. Zwar hat die Übertragung der Versorgungsspannung ausschließlich über die Schirme die vorgenannte Einschränkung nicht und es steht dabei für die Datenübertragung der volle Frequenzbereich ab DC zur Verfügung, doch kann es Einsatzfälle geben, bei denen ein Pol der Versorgungsspannung über die Datenleitungen bildenden inneren Leiter übertragen werden muss. Ein derartiger Fall wird in Fig. 9B dargestellt.

Die Einkopplung der Versorgungsspannung über die inneren Leiter 111, 112 erfolgt über einen stromkompensierten Gleichtaktübertrager mit Mittelanzapfung. Ein derartiger Gleichtaktübertrager ist als Schaltbild in Fig. 9C gezeigt. Eine alternative Darstellung eines Gleichtaktübertragers ist in Fig. 9D gezeigt. Der Gleichtaktübertrager kann beispielsweise gebildet sein aus einer auf einen Kern gewickelten verdrillten Zweidrahtleitung. Der Übertrager ist dabei so beschaltet, dass er durch die Versorgungsspannung nicht in die Sättigung kommen kann, wie in Fig. 9E gezeigt ist.

Der Übertrager ist parallel zwischen die der Datenübertragung dienenden inneren Leiter 111, 112 als Induktivität eingefügt. Er sollte individuell so bemessen sein, dass er für die vorgesehene Datenstrecke relativ gesehen hochohmig ist.

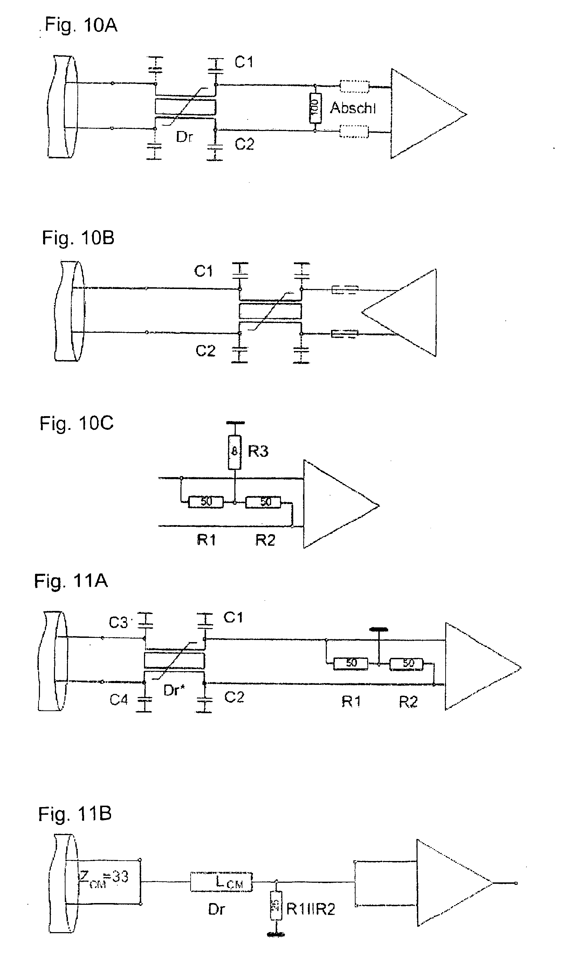

Zugleich erfolgt über den Übertrager eine Modenentkopplung und Filterung (Gleichtakt-zu-Differenztakt-Entkopplung), um Störungen auf der Versorgungsspannung von den der Datenübertragung dienenden inneren Leitern 111, 112 zu entkoppeln. Überdies verbessert dieser Koppeltransformator, wie in Fig. 10A gezeigt ist, die Symmetrie der der Datenleitung dienenden inneren Leiter 111, 112, wenn die angeschlossene Stromversorgung mindestens kapazitiv mit Masse verbunden ist. Ein vorhandener Koppeltransformator kann über die Mittelanzapfung bevorzugt mit dem zugehörigen Schirm oder der Masse verbunden werden, wenn der Gleichtaktpfad nicht zur Spannungsversorgung benötigt wird und die Datenübertragung keinen Gleichspannungsanteil enthält. Bei vorhandenem Gleichspannungsanteil kann ein Kondensator zwischengeschaltet werden, wie in den Fig. 10A und 10B dargestellt ist. Die Art und die Qualität der Trafobewicklung hat einen nicht unerheblichen Einfluss auf die Entkopplung zwischen Datenübertragung und Stromversorgung, also auf die Signalübertragung über den Gleichtaktpfad. Die sogenannte "Modenkonversionsdämpfung" ist ein Maß für die Übersprechdämpfung von einem Übertragungspfad zum benachbarten Pfad. Die Werte für handelsübliche stromkompensierte Drosseln schwanken je nach Frequenzbereich von zirka 20 dB bis zu etwa 60 dB. Hier spielt die Art der Bewicklung die entscheidende Rolle. Bei optimaler Bewicklung sind bis zu 90 dB im MHz-Bereich möglich.

Die in Fig. 10A gezeigten Kapazitäten C1, C2 kompensieren die differentielle Restinduktivität der Drossel (π-Tiefpass). Der in Fig. 10A gezeigte Widerstand, der die inneren Leiter 111, 112 miteinander verbindet, ist ein Abschlusswiderstand mit dem Wert 100 Ohm für das DM-Nutzsignal. DM bezeichnet den Differential-Mode als Spannung zwischen den beiden inneren Leitern unabhängig von der Erde beziehungsweise vom Schirm. Im Gegensatz zum Differential-Mode steht CM für den Common-Mode, der eine Gleichtakt-Spannung auf beiden inneren Leitern zusammengenommen gegen Erde beziehungsweise Schirm bezeichnet. Für den Common-Mode wird ein Abschluss von 33 Ohm gewählt, wie in Fig. 10C gezeigt ist.

Ein impedanzrichtiger CM-Abschluss wird nur empfohlen, wenn vorher kein CM-Filter vorgesehen ist. Mit vorgeschaltetem CM-Filter kann der Widerstand R3 einen Wert von 0 Ohm betragen.

Während in Fig. 10A die Empfängerseite des Datenstroms gezeigt ist, ist in Fig. 10B die Treiberseite des Datenstroms gezeigt.

Sowohl in der Darstellung der Fig. 10A, als auch in der Darstellung der Fig. 10B sind Schaltungen gezeigt, bei denen die Betriebsspannung über die Schirme geführt wird, also die keinen CM-DC-Anteil aufweisen. Ein CM-DC-Anteil ist eine Gleichspannung auf beiden Innenleitern gegenüber der Erde oder dem Schirm.

Die Fig. 11A und 11B zeigen eine Common-Mode-Filterung ohne Einfluss auf das Differential-Mode-Nutzsignal. Die Darstellung in Fig. 11A zeigt eine Situation ohne Common-Mode-DC-Anteil des Stroms. Die Kapazitäten C1 bis C4 kompensieren gegebenenfalls die differentielle Restinduktivität der Drossel (π-Tiefpass). Die Abschlusswiderstände R1 und R2 von jeweils 50 Ohm bilden einen Abschluss von 100 Ohm für das Differential-Mode-Nutzsignal und einen Abschluss von 25 Ohm für das Common-Mode-Signal aufgrund der Parallelschaltung der beiden Widerstände R1 und R2 von jeweils 50 Ohm.

Die Entkoppeldämpfung und Symmetrierung kann durch weitere, gegebenenfalls magnetische, Filterelemente gesteigert werden. In Reihe mit der Signal/Datenleitung in Richtung Schnittstelle kann eine impedanzkontrollierte Stromkompensierte Symmetriedrossel eine weitere hohe Modenentkopplung bewirken, wie in Fig. 11A und 11B dargestellt ist, wobei die Fig. 11B eine Ersatzschaltung für die Common-Mode-Filterwirkung zeigt.

Die Drosseln sind für den jeweiligen Übertragungsfrequenzbereich auszulegen. Bis ca. 100 MHz können Drosseln mit mehreren Windungen eingesetzt werden. Ab ca. 100 MHz sind bevorzugt Ferritperlen oder Ferritröhren mit nur einem Leitungsdurchgang einzusetzen. Die Frequenzgrenze für eine brauchbare Entkopplung wird vom Erfinder in der Größenordnung von 1 GHz gesehen. Bei höheren Frequenzanteilen und Datenraten wird die Spannungsübertragung über die Schirme, insbesondere die Innenschirme, bevorzugt. Die Impedanz der Innenschirme zueinander ist nicht impedanzkontrolliert. Für die in den Fig. 11A und 11B gezeigte Common-Mode-Drossel Dr sollte bei höheren Datenraten die (S)TP-Leitung [(S)TP: "shield twisted pair"] mit 100 Ohm Impedanz auf einen Kern, insbesondere einen Ringkern, gewickelt werden.

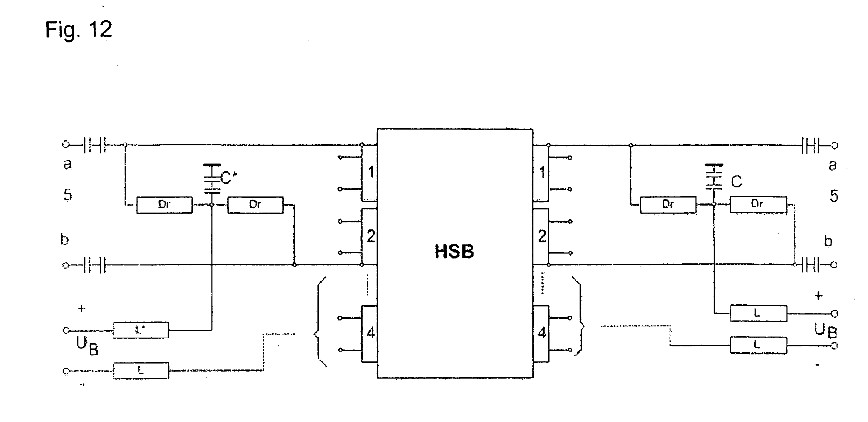

Die Fig. 12 zeigt eine Variante der Datenübertragung über eine erfindungsgemäße HSB-Datenbus-Verbindungsleitung mit vier jeweils abgeschirmten Leiter-Paaren. Eine zusätzliche Leitung zur Datenübertragung kann durch Verwendung der Innenschirme des ersten Leitungspaares und des zweiten Leitungspaares erfolgen, so dass diese beiden Innenschirme jeweils eine Datenleitung des zusätzlichen fünften Datenleitungs-Paares bilden. Somit kann anstelle einer Stromübertragung über ein isoliertes Innenschirmpaar auch eine weitere entkoppelte Daten-/Signalübertragung stattfinden. Die Innenschirme können dann aber nicht an ihren Enden direkt an Masse gelegt werden, um die Schirmübertragung nicht kurzzuschließen. Hier können aber die Schirme über einen bereits beschriebenen Ein-/Auskoppeltransformator über dessen Mittelanzapfung an Masse gelegt werden. Bei einem DC-Anteil ist ein Trennkondensator nach Masse zu schalten, wie in Fig. 12 gezeigt ist.

Auch über das zweite Innenschirmpaar der in Fig. 12 gezeigten HSB-Datenbus-Verbindungsleitung kann noch eine weitere Datenübertragung stattfinden, so dass bei der erfindungsgemäßen HSB-Datenbus-Verbindungsleitung mit vier jeweils abgeschirmten Twisted-Pair-Kabeln insgesamt sechs Datenübertragungsstrecken zusätzlich zu der Möglichkeit die Versorgungsspannung zu übertragen, zur Verfügung stehen. Gegebenenfalls sind dafür die von den Innenschirmen gebildeten zusätzlichen Datenleitungen impedanzmäßig auf die von 100 Ohm abweichende Impedanz der Innenschirmpaare anzupassen. Für die von den Twisted-Pair-Leitungen gebildeten Datenleitungen können zusätzliche CM-Filter erforderlich sein, die gegebenenfalls auf den Frequenzspektren der von den Innenschirmen gebildeten beiden zusätzlichen Datenleitungen beziehungsweise der Versorgungsspannung U_{B} abzustimmen sind.

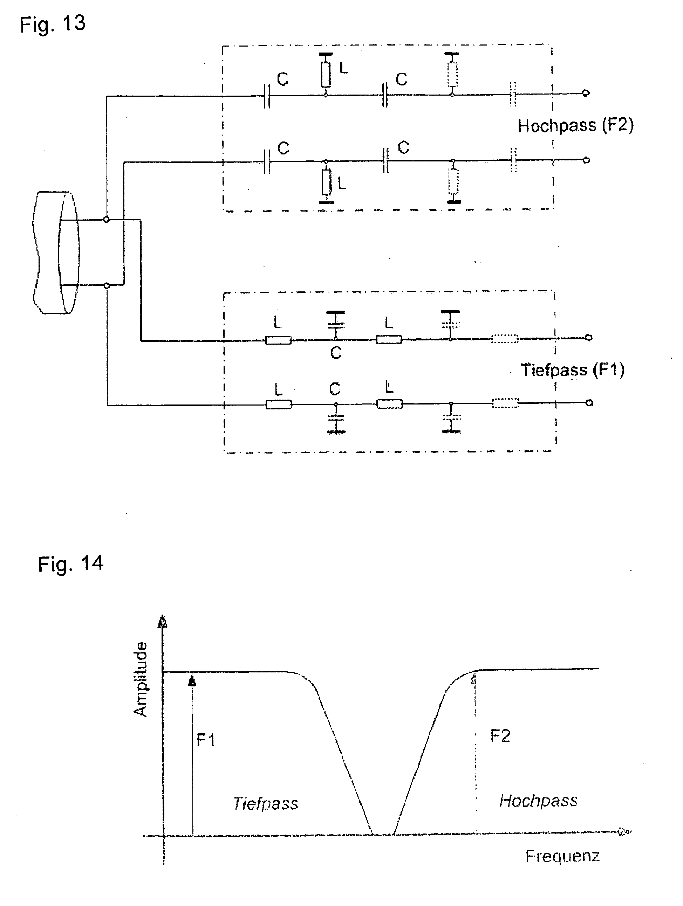

Eine weitere Möglichkeit zur Einsparung von Leitungen ist das Vorsehen einer bidirektionalen Datenübertragung auf einem Leiterpaar. Dazu kann, wie in Fig. 13 und 14 gezeigt ist, die Datenübertragung auf unterschiedlichen Frequenzen erfolgen. Die Richtungsentkopplung geschieht über symmetrische Frequenzweichen, sogenannte Diplexer. Bevorzugt kann dies bei einer gemultiplexten Einzelsignalübertragung erfolgen.

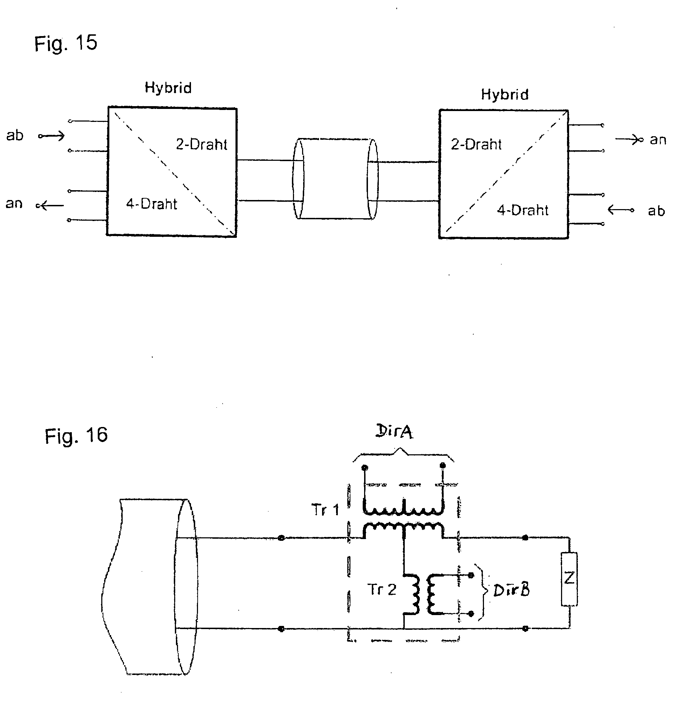

Zumindest bis in den Megahertz-Bereich ist auch eine bidirektionale Datenübertragung im selben Modus und bei gleicher Frequenz möglich. Wie allgemein aus der Telefonhörertechnik bekannt ist, kann auf nur einem Leitungspaar unabhängig in beide Richtungen übertragen werden. Hierfür sind an beiden Enden sogenannte Telefonhybride beziehungsweise Gabelschaltungen erforderlich, wie in Fig. 15 und 16 gezeigt ist.

Fig. 15 zeigt das Prinzipschaltbild einer Zweidraht-/Vierdraht-Umsetzung, wie es als Gabelschaltung zur Richtungsentkopplung zweier Datenströme aus der Telefontechnik bekannt ist. Im Beispiel der Fig. 15 ist als Zweidraht-Verbindungsleitung ein Leiterpaar einer erfindungsgemäßen HSB-Datenbus-Verbindungsleitung gezeigt. Fig. 16 zeigt das Prinzipschaltbild eines der in Fig. 15 gezeigten Hybriden zur Zweidraht-/Vierdraht-Umsetzung. Die Übertrager Tr1 und Tr2 sind leitungsseitig auf unterschiedliche Impedanz anzupassen: Tr1 sieht 200 Ohm und Tr2 sieht 50 Ohm. Der Übertrager Tr1 ist zuständig für die Richtungsentkopplung der ersten Richtung DirA und der Übertrager Tr2 ist zuständig für die Richtungsentkopplung der zweiten Richtung DirB. Der Widerstand Z dient der Leitungsnachbildung und beträgt im Falle der erfindungsgemäßen HSB-Datenbus-Verbindungsleitung bevorzugt 100 Ohm. Diese in den Fig. 15 und 16 dargestellte Hybridisierung zweier Datenströme kann bei niedrigen Datenraten verwendet werden. Die Qualität der Entkopplung hängt ab von der Bewicklung der Übertrager und der Qualität der Leitungsnachbildung durch den Widerstand Z.

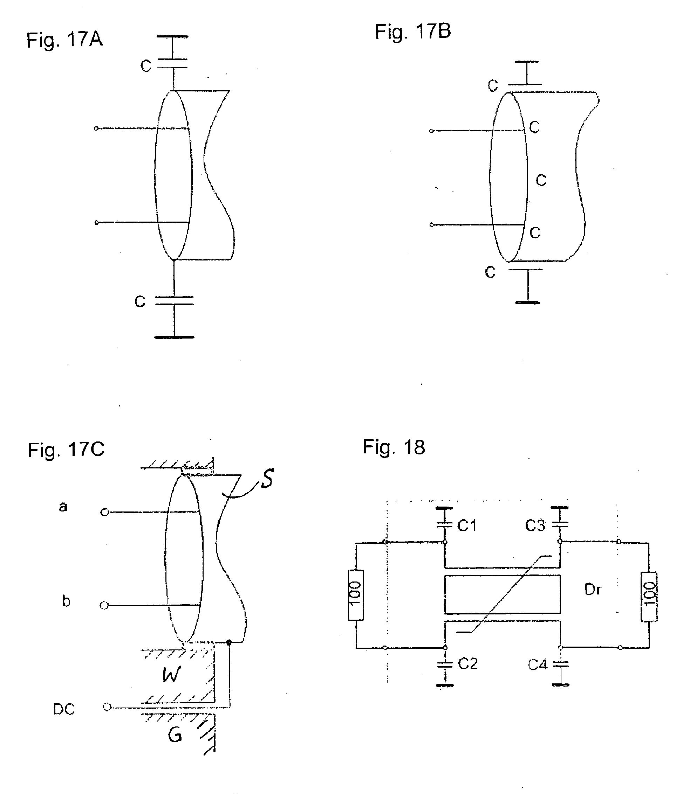

Die Fig. 17A und 17B zeigen die Innenschirmanbindung bei Übertragung einer Versorgungsspannung. Nach der reinen Lehre der elektromagnetischen Verträglichkeit sollen Kabelschirme an beiden Enden geerdet werden. Die Enden der Innenschirme der erfindungsgemäßen HSB-Datenbus-Verbindungsleitung können nur kapazitiv geerdet werden, das heißt es gibt dadurch theoretische Schirmeinschränkungen am unteren Frequenzbandende. Durch den ideal geerdeten Außenschirm der HSB-Datenbus-Verbindungsleitung und die symmetrische Datenübertragung gibt es aber in der Praxis kaum derartige Einschränkungen. Das Innenschirmpotential wirkt auf einen zugehörigen Signalempfänger als Gleichtaktpotential. Prinzipiell nimmt die Gleichtaktunterdrückung eines differentiellen Signalempfängers mit fallender Frequenz zu und wirkt auf diese Weise einem möglichen Störspannungsanstieg im untersten Frequenzbereich entgegen.

Die Fig. 17A und 17B zeigen den Unterschied zwischen der Entkopplung vom Innenschirm zur Datenleitung mittels diskreter Kondensatoren C in Fig. 17A und einer Variante (17B), in der eine Mehrzahl von Kondensatoren, vorzugsweise SMD-Kondensatoren über den Umfang des Innenschirms verteilt angeordnet sind, so dass dadurch eine Annäherung an einen idealen Durchführungskondensator gebildet wird. Der Innenschirm bildet dabei den Innenleiter des Durchführungskondensators. Dadurch wird eine bestmögliche EMV-Entkopplung für die Innenschirmanbindung, also eine Entkopplung des Schirms zwischen innen und außen mittels des Durchführungskondensators erreicht. Hierdurch besteht die Möglichkeit einer räumlichen Schirmtrennung zwischen zwei Signalen beziehungsweise zwischen einem Signal und der Stromübertragung.

Fig. 17C zeigt die Stromeinspeisung beziehungsweise die Stromauskopplung zwischen dem Durchführungskondensator und der Kabelseite. Die Datenleitungen a und b sind vom Innenschirm S umgeben. Die Bezugszeichen W und G bezeichnen die Schirmwand des in Fig. 17C dargestellten Steckergehäuses, die den inneren Schirmraum eines Steckers zwischen Innen- und Außenschirm abschließt. Der Innenschirm liegt im Idealfall 360° rundum kapazitiv am Gehäuse des Steckers (Schirmwand W und G) auf. Der am inneren Schirm S anliegende Pol der Versorgungsspannung DC wird als Innenleiter des Durchführungskondensators zwischen der Schirmwand und dem Gehäuse hindurchgeführt.

Alternativ zum Vorsehen eines Durchführungskondensators kann ein magnetischer Schirmabschluss durch eine Ferrithülse vorgesehen sein.

Die Stromeinspeisung in den inneren Schirm S erfolgt bevorzugt hinter dem Durchführungskondensator beziehungsweise hinter dem Filter auf der Leitungsseite. Damit sind die beiden Signale oder die Stromversorgung sowohl über den Schirm selbst, als auch über den Durchführungskondensator entkoppelt. Die höherfrequenten Störanteile, die eine Stromversorgungsleitung immer haben kann, werden bei Zwischenschaltung eines Durchführungskondensators hauptsächlich auf der Außenseite des Innenschirms transportiert. Der Schirm ist für die hochfrequenten Störanteile zur Datenleitung im Inneren hin nicht durchlässig (Schirmfunktion und Skineffekt). Die durch den Schirm und den Kondensator weniger gedämpften Tieffrequenzstöranteile (bis hinein in den Audiofrequenzbereich) treffen auf die hohe Gleichtaktdämpfung der eingesetzten Signalempfänger.

Die bevorzugte Übertragung der Versorgungsspannung bei der erfindungsgemäßen HSB-Datenbus-Verbindungsanordnung ist für Gleichspannung (DC) vorgesehen. Technisch ist es auch möglich, Wechselspannungen zu übertragen. Die Höhe der maximal übertragbaren Spannungen richtet sich einerseits nach der Isolationsfestigkeit der beteiligten Dielektrika und entsprechender Sicherheitsfaktoren, andererseits kann die maximale Spannung durch entsprechende Sicherheitsnormen beschränkt sein. Zur Schadensbegrenzung im Fehlerfall bei einem Spannungsdurchschlag in Richtung Datenleitung können zusätzliche Maßnahmen oder Bauteile erforderlich sein. Die Redundanzphilosophie der Luft- und Raumfahrt lässt sich auch bei der erfindungsgemäßen HSB-Datenbus-Verbindungsanordnung realisieren.

Die bevorzugt zu verwendenden Steckverbinder für die erfindungsgemäße HSB-Datenbus-Verbindungsanordnung sind aufgrund ihrer Bauform verpolungssicher ausgestaltet. Die HSB-Datenbus-Verbindungsleitungen sind bevorzugt als Verlängerungskabel (ein Anschlusselement als männlicher Stecker, das andere Anschlusselement als weiblicher Stecker ausgebildet) ausgelegt. Die Spannung steht dann, wenn überhaupt, berührungssicher nur am geschützten Buchsenteil an.

Bei der Übertragung von Wechselstrom über eine HSB-Datenbus-Verbindungsleitung können weitere Gleichtaktentkoppelelemente oder Filterelemente, beispielsweise Symmetriedrosseln, auf den Datenleitungen erforderlich sein. Ein Beispiel für eine höhere Common-Mode-Entkopplung bei Wechselstromübertragung zeigt Fig. 18. Dort ist das Prinzipschaltbild eines π-Filters gegen Common-Mode und zur Erhöhung der Treiber-Empfänger-Symmetrie dargestellt. Die Kondensatoren C1, C2, C3, C4 dienen zur Kompensation der Streuinduktivität des nicht kompensierten Direct-Mode-Induktivitätsanteils. Um höchste Symmetrie zu gewährleisten, sind die Kondensatoren C1 und C2 sowie C3 und C4 gepaart ausgewählt. Die Drossel Dr weist eine symmetrische 100 TP-Leitung (TP: "twisted pair") auf hochpermeablem Kern aus.

Es gibt keine technische Grenze für die Höhe der Leitungsentkopplung. Die erforderliche Entkopplung richtet sich nach den Erfordernissen für die Anwendung. Mit den vorstehend beschriebenen zwei bis drei hochwertigen Entkoppelbauteilen pro Schnittstelle lassen sich für die meisten Anwendungen genügend hohe Entkopplungen realisieren.

Die bevorzugte maximale Länge einer erfindungsgemäßen HSB-Datenbus-Verbindungsleitung richtet sich nach dem maximal zulässigen Spannungsabfall, der maximal zu übertragenden Frequenz mit zulässiger Dämpfung und der hierfür erforderlichen Entkoppeldämpfung. Eine bevorzugte HSB-Datenbus-Verbindungsleitung weist vier jeweils mit einem Innenschirm abgeschirmte Leiterpaare auf. Eine Kabellänge von 10 Metern ist bei einer Stromübertragung von 5 A bis 10 A Gleichstrom bei einer Niederspannung von beispielsweise 28 Volt und 10 Gbit/s (Ethernetcodierung) pro Doppelleiter realisierbar. Diese Leitung kann bevorzugt auf Satelliten eingesetzt werden.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Busleitung
- 2: Busleitung
- 3: Busleitung
- 10: Anschlusselement
- 12: Anschlusselement
- 14: Geräteanschluss
- 16: Geräteanschluss
- 20: Anschlusselement
- 21: Kabel
- 22: Anschlusselement
- 30: Anschlusselement
- 100: Steckverbinder
- 101: erster Pol
- 102: zweiter Pol
- 103: innerer Schirmpol
- 104: äußerer Schirmpol
- 111: innerer Leiter
- 112: innerer Leiter
- 113: innerer Schirm
- 114: äußerer Schirm
- 120: Steckverbinder
- 121: erster Pol
- 122: zweiter Pol
- 123: innerer Schirmpol
- 124: äußerer Schirmpol
- 200: Steckverbinder
- 200A: Kontakteinrichtung
- 200B: Kontakteinrichtung
- 201: Pol
- 202: Pol
- 203: Schirmpol
- 205: Pol
- 204: äußerer Schirmpol
- 206: Pol
- 207: Schirmpol
- 211: Verbindungsleitung
- 212: Verbindungsleitung
- 213: innerer Schirm
- 214: äußerer Schirm
- 215: CM-Sperre
- 231: Verbindungsleitung
- 232: Verbindungsleitung
- 233: innerer Schirm
- 300: Steckverbinder
- 300A: Kontakteinrichtung
- 300B: Kontakteinrichtung
- 300C: Kontakteinrichtung
- 300D: Kontakteinrichtung
- 311: Leiter
- 312: Leiter
- 313: Innenschirm
- 314: Außenschirm
- 331: Leiter
- 332: Leiter
- 333: Innenschirm
- 341: Leiter
- 342: Leiter
- 343: Innenschirm
- 351: Leiter
- 352: Leiter
- 353: Innenschirm
- 400: elektrisches Gerät
- 401: Busleitung
- 402: Busleitung
- 403: Busleitung
- 404: Busleitung
- 410: Interfaceeinheit
- 411: Geräteanschluss
- 412: Geräteanschluss
- 413: Geräteanschluss
- 414: Geräteanschluss
- 420: Stromversorgungseinrichtung
- 430: Datenquelle
- 441: Geräteanschluss
- 442: Geräteanschluss
- 443: Geräteanschluss
- 444: Geräteanschluss
- 451: elektrisches Gerät
- 452: elektrisches Gerät
- 453: elektrisches Gerät
- 454: elektrisches Gerät
- a: Datenleitung
- b: Datenleitung
- B: Bus
- C1: Kondensator
- C2: Kondensator
- C3: Kondensator
- C4: Kondensator
- C₁₁: Durchführungskondensator
- C₁₂: Durchführungskondensator
- C₁₃: Durchführungskondensator
- C₁₄: Durchführungskondensator
- CM: Common-Mode
- D1: CM-Drossel
- D2: CM-Drossel
- DirA: erste Richtung
- DirB: zweite Richtung
- DM: Differential-Mode
- G: Schirmwand
- IFU: Schnittstelleneinheit
- K1: Koppeleinrichtung
- K2: Koppeleinrichtung
- K3: Koppeleinrichtung
- K4: Koppeleinrichtung
- OBC: Computer
- R1: Abschlusswiderstand
- R2: Abschlusswiderstand
- R3: Widerstand
- S: Innenschirm
- S1: Signal
- S2: Signal
- S3: Signal
- Sn: Signal
- SB: Busverbindung
- Tr1: Übertrager
- Tr2: Übertrager
- U_{B}: Versorgungsspannung
- W: Schirmwand

## Patentansprüche

1. Datenbus-Verbindungsanordnung mit
- zumindest einem ersten Geräteanschluss (14);
- zumindest einem zweiten Geräteanschluss (16) und
- einer den ersten und den zweiten Geräteanschluss (14, 16) miteinander verbindenden Busleitung (1),
■ wobei die Busleitung (1) zumindest ein erstes Anschlusselement (10) zur Koppelung mit dem zumindest einen ersten Geräteanschluss (14) und zumindest ein zweites Anschlusselement (12) zur Koppelung mit dem zumindest einem zweiten Geräteanschluss (16) sowie ein die elektrischen Anschlüsse (101, 102; 121, 122) der beiden Anschlusselemente (10, 12) durch eine Mehrzahl von Leitern (111, 112) elektrisch leitend miteinander verbindendes Kabel (11) aufweist,
■ wobei zumindest einige der Leiter (111, 112) mit zumindest einem Schirm (113,114) zur Abschirmung versehen sind; und
■ wobei die Leiter (111, 112) zur Übertragung von Datensignalen ausgebildet sind;
**dadurch gekennzeichnet,**
- **dass** der zumindest eine Shirm (113, 114) einen ersten Schirm (113) und einen weiteren Schirm (114) umfasst, und daß der erste Schirm (113) und der weite Schirm (114) zur Übertragung eines Versorgungsstroms mit einer Versorgungsspannung beaufschlagbar sind.

2. Datenbus-Verbindungsanordnung nach Anspruch 1,
**dadurch gekennzeichnet,**
- **dass** die Versorgungsspannung an gegeneinander isolierten Schirmen (113, 114) anliegt und so der Versorgungsstrom über die jeweils einem Pol zugeordneten Schirme (113, 114) geleitet wird.

3. Datenbus-Verbindungsanordnung nach Anspruch 2,
**dadurch gekennzeichnet,**
- **dass** zur Übertragung des Versorgungsstroms für zumindest für einen Pol der Versorgungsspannung mindestens zwei Schirme (213, 233) als Leiter parallel geschaltet sind.

4. Datenbus-Verbindungsanordnung nach einem der vorhergehenden Ansprüche,
**dadurch gekennzeichnet,**
- **dass** das Kabel (11) einen zumindest einen Teil der abgeschirmten Leitungen (111, 112) umschließenden Außenschirm (114) aufweist.

5. Datenbus-Verbindungsanordnung nach Anspruch 4
**dadurch gekennzeichnet,**
- **dass** ein erster Pol der Versorgungsspannung vom Außenschirm (114) gebildet ist und dass ein zweiter Pol von zumindest einem inneren Schirm (113) gebildet ist.

6. Datenbus-Verbindungsanordnung nach einem der vorhergehenden Ansprüche,
**dadurch gekennzeichnet,**
- **dass** die Geräteanschlüsse (14, 16) und die Anschlusselemente (10, 12) der Busleitung (1) HF-Steckverbinder (100, 120) aufweisen.

7. Datenbus-Verbindungsleitung für eine Datenbus-Verbindungsanordnung nach einem der vorhergehenden Ansprüche, mit
- zumindest einem ersten Anschlusselement (10) mit zumindest einem Steckverbinder (100);
- zumindest einem zweiten Anschlusselement (12) mit zumindest einem Steckverbinder (120) sowie
- einem die elektrischen Anschlüsse (101, 102; 121, 122) der beiden Anschlusselemente (10, 12) durch eine Mehrzahl von Leitern (111, 112) elektrisch leitend miteinander verbindendes Kabel (11) aufweist,
- wobei zumindest einige der Leiter (111, 112) mit zumindest einem Schirm (113, 114) zur Abschirmung versehen sind; und
- wobei die Leiter (111, 112) zur Übertragung von Datensignalen ausgebildet sind;
**dadurch gekennzeichnet,**
- **dass** der zumindest eine Schirm (113, 114) einen ersten Schirm (113) und einen weiteren Schirm (114) umfasst, und daß der erste Schirm (113) und der weitere Schirm (114) zur Übertragung eines Versorgungsstroms ausgebildet und mit einer Versorgungsspannung beaufschlagbar sind.

8. Datenbus-Verbindungsleitung nach Anspruch 7,
**dadurch gekennzeichnet,**
- **dass** zumindest zwei Schirme (213, 233) zur Übertragung des Versorgungsstroms parallel schaltbar sind.

## Claims

1. Data bus connecting arrangement having
- at least one first device connection (14);
- at least one second device connection (16) and
- a bus line (1) which connects the first and the second device connection (14, 16) to one another,
■ with the bus line (1) having at least one first connection element (10) for being coupled to the at least one first device connection (14) and having at least one second connection element (12) for being coupled to the at least one second device connection (16) and also having a cable (11) which electrically conductively connects the electrical connections (101, 102; 121, 122) of the two connection elements (10, 12) to one another by virtue of a plurality of conductors (111, 112),
■ with at least some of the conductors (111, 112) being provided with at least one shield (113, 114) for shielding purposes; and
■ with the conductors (111, 112) being designed to transmit data signals;
**characterized**
- **in that** the at least one shield (113, 114) comprises a first shield (113) and a further shield (114), and in that the first shield (113) and the further shield (114) can be supplied with a supply voltage for transmitting a supply current.

2. Data bus connecting arrangement according to Claim 1,
**characterized**
- **in that** the supply voltage is applied to shields (113, 114) which are isolated from one another and therefore the supply current is conducted by means of the shields (113, 114) which are associated with one pole in each case.

3. Data bus connecting arrangement according to Claim 2,
**characterized**
- **in that** at least two shields (213, 233) are connected in parallel as conductors for the purpose of transmitting the supply current at least for one pole of the supply voltage.

4. Data bus connecting arrangement according to one of the preceding claims,
**characterized**
- **in that** the cable (11) has an outer shield (114) which surrounds at least a portion of the shielded lines (111, 112).

5. Data bus connecting arrangement according to Claim 4,
**characterized**
- **in that** a first pole of the supply voltage is formed by the outer shield (114), and in that a second pole is formed by at least one inner shield (113).

6. Data bus connecting arrangement according to one of the preceding claims,
**characterized**
- **in that** the device connections (14, 16) and the connection elements (10, 12) of the bus line (1) have RF plug connectors (100, 120).

7. Data bus connecting line for a data bus connecting arrangement according to one of the preceding claims, having
- at least one first connection element (10) with at least one plug connector (100);
- at least one second connection element (12) with at least one plug connector (120) and also
- a cable (11) which electrically conductively connects the electrical connections (101, 102; 121, 122) of the two connection elements (10, 12) to one another by virtue of a plurality of conductors (111, 112),
- with at least some of the conductors (111, 112) being provided with at least one shield (113, 114) for shielding purposes; and
- with the conductors (111, 112) being designed to transmit data signals;
**characterized**
- **in that** the at least one shield (113, 114) comprises a first shield (113) and a further shield (114), and in that the first shield (113) and the further shield (114) are designed for transmitting a supply current and can be supplied with a supply voltage.

8. Data bus connecting line according to Claim 7,
**characterized**
- **in that** at least two shields (213, 233) can be connected in parallel for the purpose of transmitting the supply current.

## Revendications

1. Système de connexion de bus de données comportant :
- au moins un premier raccordement d'appareil (14) ;
- au moins un second raccordement d'appareil (16) et
- une ligne de bus (1) connectant entre eux les premier et second raccordements d'appareil (14, 16),
• dans lequel la ligne de bus (1) comprend au moins un premier élément de raccordement (10) destiné à un couplage avec l'au moins un premier raccordement d'appareil (14) et au moins un second élément de raccordement (12) destiné à un couplage à l'au moins un second raccordement d'appareil (16) ainsi qu'un câble (11) reliant l'un à l'autre de manière électriquement conductrice les raccords électriques (101, 102 ; 121, 122) des deux éléments de raccordement (10, 12) par l'intermédiaire d'une pluralité de conducteurs (111, 112),
• dans lequel au moins certains des conducteurs (111, 112) sont munis d'au moins un blindage (113, 114) destiné à former un blindage ; et
• dans lequel les conducteurs (111, 112) sont conçus pour transmettre des signaux de données ;
**caractérisé en ce que**
- l'au moins un blindage (113, 114) comprend un premier blindage (113) et un blindage supplémentaire (114), et **en ce que** le blindage (113) et le blindage supplémentaire (114) peuvent être amenés à transmettre un courant d'alimentation présentant une tension d'alimentation.

2. Système de connexion de bus de données selon la revendication 1, **caractérisé en ce que**
- la tension d'alimentation est présente aux bornes de blindages (113, 114) isolés l'un de l'autre de manière à ce que le courant d'alimentation soit acheminé par l'intermédiaire des blindages (113, 114), dont chacun est associé à un pôle.

3. Système de connexion de bus de données selon la revendication 2, **caractérisé en ce que** :
- au moins deux blindages (213, 233) sont connectés en parallèle en tant que conducteurs destinés à transmettre le courant d'alimentation pour au moins un pôle de la tension d'alimentation.

4. Dispositif de connexion de bus de données selon l'une quelconque des revendications précédentes, **caractérisé en ce que** :
- le câble (11) comprend au moins un blindage extérieur (114) entourant une partie des conducteurs blindés (111, 112).

5. Dispositif de connexion de bus de données selon la revendication 4, **caractérisé en ce que** :
- un premier pôle de la tension d'alimentation est formé par le blindage extérieur (114) et **en ce qu'**un second pôle est constitué par au moins un blindage intérieur (113).

6. Dispositif de connexion de bus de données selon l'une quelconque des revendications précédentes, **caractérisé en ce que** :
- les raccords d'appareils (14, 16) et les éléments de raccordement (10, 12) de la ligne de bus (1) comprennent des connecteurs HF (100, 120).

7. Ligne de connexion de bus de données destinée à un dispositif de connexion de bus de données selon l'une quelconque des revendications précédentes comportant :
- au moins un premier élément de raccordement (10) comportant au moins un connecteur (100) ;
- au moins un second élément de raccordement (12) comportant au moins un connecteur (120) et
- un câble (11) connectant l'un à l'autre de manière électriquement conductrice les raccords électriques (101, 102 ; 121, 122) des deux éléments de raccordement (10, 12) par l'intermédiaire d'une pluralité de conducteurs (111, 112),
dans lequel au moins certains des conducteurs (111, 112) sont munis d'au moins un blindage (113, 114) ; et dans lequel les conducteurs (111, 112) sont conçus pour transmettre des signaux de données ; **caractérisé en ce que**
- l'au moins blindage (113, 114) comprend un premier blindage (113) et un blindage supplémentaire (114), et **en ce que** le premier blindage (113) et le blindage supplémentaire (114) peuvent être amenés à transmettre un courant d'alimentation présentant une première tension d'alimentation.

8. Ligne de connexion de bus de données selon la revendication 7, **caractérisée en ce que**
- les au moins deux blindages (213, 233) peuvent être connectés en parallèle pour transmettre le courant d'alimentation.
